# EUROPEAN PATENT APPLICATION

(11) **EP 4 737 308 A1**
(43) Date of publication of application: **06.05.2026**
(21) Application number: 25212034.0
(22) Date of filing: 29.10.2025
(51) Int. Cl.: B64C 11/00, B64C 1/40, F01D 5/14, F01D 5/16, B64C 21/02, B64C 11/26

(54) **SWIRL RECOVERY VANE WITH STRUCTURALLY CAPABLE ACOUSTIC TREATMENT, GAS TURBINE ENGINE AND PROCESS FOR FORMING A GAS TURBINE ENGINE**

(30) Priority: 31.10.2024 US 202418933469
(71) Applicant: RTX Corporation, Farmington, CT 06032 (US)
(72) Inventor: Yazici, Murat, Glastonbury, 06033 (US); Breault, Andrew E., Bolton, 06043 (US); Morton, Jeffrey T., Glastonbury, 06033 (US)
(74) Representative: Schmitt-Nilson Schraud Waibel Wohlfrom Patentanwälte Partnerschaft mbB

(57) **Abstract**

A swirl recovery vane with structurally capable acoustic treatment includes a leading edge and a trailing edge opposite chordwise from the leading edge; an attachment region opposite spanwise from a tip region; a span dimension extending between the attachment region and the tip region; a chord dimension extending between the leading edge and trailing edge; a pressure side opposite a suction side of the swirl recovery vane; a structural feature formed within the swirl recovery vane extending at least one of spanwise through the swirl recovery vane between the attachment region and tip region and/or chordwise between the leading edge and the trailing edge; an acoustic receiver formed within the structural feature extending at least one of spanwise through the swirl recovery vane between the attachment region and the tip region or chordwise between the leading edge and the trailing edge; and an acoustic panel inserted into the acoustic receiver. A gas turbine engine includes the swirl recovery vane with structurally capable acoustic treatment. A process forms the gas turbine engine with the swirl recovery vane with structurally capable acoustic treatment.

## Description

The present disclosure is directed to the improved structurally and acoustically capable swirl recovery vane structure.

The swirl recovery vane pattern is defined to meet structural, performance and acoustic requirements across a wide range of operating conditions. Engine noise is challenging for open rotor architectures. Engine and airframe makers are looking for more opportunities for noise reduction. At the engine side, acoustic treatable areas are limited. Swirl recovery vanes are an area for noise reduction opportunities.

In accordance with the present disclosure, there is provided a swirl recovery vane with structurally capable acoustic treatment comprising a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane; a structural feature formed within the swirl recovery vane extending at least one of spanwise through the swirl recovery vane between the attachment region and the tip region and/or chordwise between the leading edge and the trailing edge; an acoustic receiver formed within the structural feature extending at least one of spanwise through the swirl recovery vane between the attachment region and the tip region or chordwise between the leading edge and the trailing edge; and an acoustic panel inserted into the acoustic receiver.

Particular embodiments further may include at least one, or a plurality of, the following optional features, alone or in combination with each other:

A further embodiment of any of the foregoing embodiments may additionally and/or alternatively include the structural feature and the acoustic receiver are formed in the swirl recovery vane at predetermined locations along the span of the swirl recovery vane.

A further embodiment of any of the foregoing embodiments may additionally and/or alternatively include the acoustic panel is located on the pressure side.

A further embodiment of any of the foregoing embodiments may additionally and/or alternatively include the acoustic receiver shape is selected from the group consisting of rectangular, oval, circle, semicircle, triangle, square, rectangle, parallelogram, rhombus, trapezoid, diamond, pentagon, hexagon, octagon, nonagon, decagon.

A further embodiment of any of the foregoing embodiments may additionally and/or alternatively include the swirl recovery vane with structurally capable acoustic treatment further comprising the acoustic treatment formed within the acoustic receiver, the acoustic treatment configured to dissipate sound energy.

A further embodiment of any of the foregoing embodiments may additionally and/or alternatively include the acoustic panel is configured insertable as a snap fit or friction fit into the acoustic receiver.

A further embodiment of any of the foregoing embodiments may additionally and/or alternatively include the acoustic panel is configured interchangeable to accommodate design changes and/or damage to the acoustic panel.

In accordance with the present disclosure, there is provided a gas turbine engine with a swirl recovery vane with structurally capable acoustic treatment comprising a propulsor rotor located within an open environment; an array of swirl recovery vanes supported downstream from the propulsor rotor , the array of swirl recovery vanes attached to a nacelle flow surface; each swirl recovery vane of the array of swirl recovery vanes comprising a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane; a structural feature formed within the swirl recovery vane extending at least one of spanwise through the swirl recovery vane between the attachment region and the tip region and/or chordwise between the leading edge and the trailing edge; an acoustic receiver formed within the structural feature extending at least one of spanwise through the swirl recovery vane between the attachment region and the tip region or chordwise between the leading edge and the trailing edge; and an acoustic panel inserted into the acoustic receiver.

Particular embodiments further may include at least one, or a plurality of, the following optional features, alone or in combination with each other:

A further embodiment of any of the foregoing embodiments may additionally and/or alternatively include the structural feature and the acoustic receiver are formed in the swirl recovery vane at predetermined locations along the span of the swirl recovery vane.

A further embodiment of any of the foregoing embodiments may additionally and/or alternatively include the gas turbine engine with the swirl recovery vane with structurally capable acoustic treatment further comprising the acoustic treatment formed within the acoustic panel, the acoustic treatment configured to dissipate sound energy.

A further embodiment of any of the foregoing embodiments may additionally and/or alternatively include the acoustic receiver is located on the pressure side of the swirl recovery vane.

A further embodiment of any of the foregoing embodiments may additionally and/or alternatively include the acoustic panel is located on the suction side of the swirl recovery vane.

A further embodiment of any of the foregoing embodiments may additionally and/or alternatively include the gas turbine engine with the swirl recovery vane with structurally capable acoustic treatment further comprising a surface skin in operative communication with the acoustic treatment.

In accordance with the present disclosure, there is provided a process for gas turbine engine with a swirl recovery vane with a structurally capable acoustic treatment comprising: locating a propulsor rotor within an open environment; supporting an array of swirl recovery vanes downstream from the propulsor rotor; attaching the array of swirl recovery vanes to a nacelle flow surface by; coupling a attachment region of a swirl recovery vane of the array of swirl recovery vanes in operative communication with the nacelle flow surface; forming a structural feature within the swirl recovery vanes extending at least one of spanwise through the swirl recovery vane between the attachment region and a tip region of the swirl recovery vane and/or chordwise from a leading edge to a trailing edge; forming an acoustic receiver within the swirl recovery vane extending at least one of spanwise from the swirl recovery vane between the attachment region and the tip region or chordwise from the leading edge to the trailing edge; and inserting an acoustic panel into the acoustic receiver.

Particular embodiments further may include at least one, or a plurality of, the following optional features, alone or in combination with each other:

A further embodiment of any of the foregoing embodiments may additionally and/or alternatively include the process further comprising forming the acoustic receiver in the swirl recovery vane at predetermined locations along the span of the swirl recovery vane.

A further embodiment of any of the foregoing embodiments may additionally and/or alternatively include the process further comprising forming the acoustic treatment within the acoustic panel; and configuring the acoustic treatment to dissipate sound energy.

A further embodiment of any of the foregoing embodiments may additionally and/or alternatively include the process further comprising locating the acoustic receiver on the pressure side of the swirl recovery vane.

A further embodiment of any of the foregoing embodiments may additionally and/or alternatively include the process further comprising configuring the acoustic panel insertable as a snap fit or friction fit into the acoustic panel receiver.

A further embodiment of any of the foregoing embodiments may additionally and/or alternatively include the process further comprising configuring the acoustic receiver and acoustic panel as a combination panel receiver interchangeable to accommodate design changes and/or damage.

A further embodiment of any of the foregoing embodiments may additionally and/or alternatively include the process further comprising shaping the acoustic panel to influence acoustic dampening capability in the proximity of the swirl recovery vane.

Other details of the structurally and acoustically capable swirl recovery vane structure are set forth in the following detailed description and the accompanying drawings wherein like reference numerals depict like elements.
Fig. 1 is a schematic representation of a gas turbine engine with unducted rotor exposed to an open environment.
Fig. 2 is a sectional view of schematic representation of the exemplary swirl recovery vane with structurally capable acoustic treatment.
Fig. 3 is a schematic representation of exemplary swirl recovery vane with structurally capable acoustic treatment shown as a two-dimensional shape.
Fig. 4 is a schematic representation of exemplary swirl recovery vane with structurally capable acoustic treatment shown as three-dimensional shapes.
Fig. 5 is a schematic representation of an exemplary acoustic treatment formed as acoustic panels.
Fig. 6 is a schematic representation of an exemplary combination panel for installing acoustic treatment to a swirl recovery vane creating a structurally capable acoustically treated swirl recovery vane.
Fig. 7 a schematic representation of exemplary swirl recovery vane with structurally capable acoustic treatment and a surface skin.

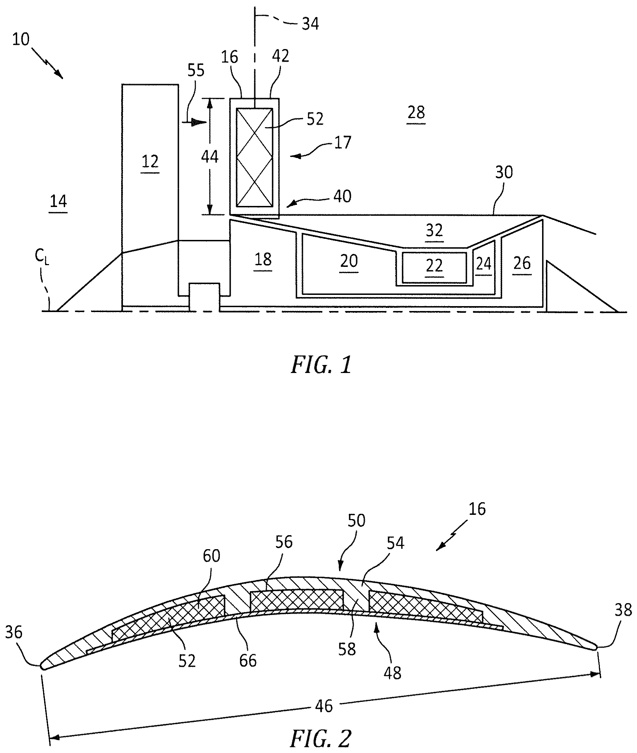

Referring now to Fig. 1 showing a schematic of a gas turbine engine 10. The gas turbine engine 10 includes a propulsor rotor 12 proximate an engine inlet 14. An open rotor core gas generator inlet may be as shown or reversed as in a reverse flow configuration. Downstream from the propulsor rotor 12 is a swirl recovery vane 16. The gas turbine engine 10 can be an open rotor engine centered about centerline CL. The swirl recovery vanes 16 can be arranged as an array 17 configured about the centerline CL or another centerline. The gas turbine engine 10 includes sections listed from forward toward aft, such as, a low pressure compressor (LPC) 18, high pressure compressor (HPC) 20, combustor (COMB) 22, high pressure turbine (HPT) 24, and low pressure turbine (LPT) 26. The orientation of sections 18-26 may be arranged in a different orientation from what is shown in Fig. 1, such as in a reverse core orientation (not shown). An open environment 28 is exterior to a nacelle flow surface 30.

The nacelle flow surface 30 is shown bounding a core compartment 32. The core compartment 32 encloses the above listed gas turbine engine 10 sections. The gas turbine engine 10 can include various propulsion system architectures including a tractor (propulsor rotor and swirl recovery vane at an upstream end of the propulsion system) and a pusher (propulsor rotor and swirl recovery vane at a downstream end of the propulsion system) architectures. In a pusher architecture, the swirl recovery vanes 16 in an optional embodiment may be upstream of the propulsor rotor 12 and may act to pre swirl the air rather than recover swirl.

The swirl recovery vane 16 extends into the open environment 28. The swirl recovery vane 16 is in operative communication with the nacelle flow surface 30. The swirl recovery vane 16 includes a vane stacking axis 34 that is largely radially aligned with respect to the centerline CL. The swirl recovery vane 16 can be a cantilever supported structure. In an exemplary embodiment, the swirl recovery vane 16 can have a variable pitch.

With reference also to Fig. 2, the swirl recovery vane 16 includes a leading edge 36 and a trailing edge 38 opposite chordwise from the leading edge 36.

The swirl recovery vane 16 includes an attachment region 40 proximate the nacelle flow surface 30. The attachment region 40 of the swirl recovery vane 16 attaches to the nacelle flow surface 30 or a variable pitch mechanism contained within the nacelle flow surface 30 (not shown in the figures). The swirl recovery vane 16 includes a tip region 42 opposite the attachment region 40.

The swirl recovery vane 16 includes a span 44 dimension extending between the attachment region 40 and the tip region 42. The swirl recovery vane 16 includes a chord dimension 46 extending between the leading edge 36 and the trailing edge 38, as seen in Fig 2. The swirl recovery vane 16 can include a pressure side 48 and a suction side 50 opposite the pressure side 48.

The swirl recovery vane 16 shown in Fig 1 is oriented generally vertical, that is along a radial direction, that follows the vane stacking axis 34 relative to the centerline CL axis of the array 17 or can include a canted orientation. In an exemplary embodiment, the vane stacking axis can be canted aft, that is the attachment region 40 is forward of the tip region 42.

The swirl recovery vane 16 can include an acoustic treatment 52. The acoustic treatment 52 can be any material or structure configured to dissipate sound energy. The acoustic treatment 52 can include various materials and/or structures with sound-absorbing and diffusing properties. In an exemplary embodiment the acoustic treatment 52 can provide a broadband noise benefit from about 1 to 5 EPNdB. The acoustic treatment 52 can be varied from one swirl recovery vane 16 to another. The variation can be by varying the materials, the shape and the location of the acoustic treatment 52 on each swirl recovery vane 16 in the array 17.

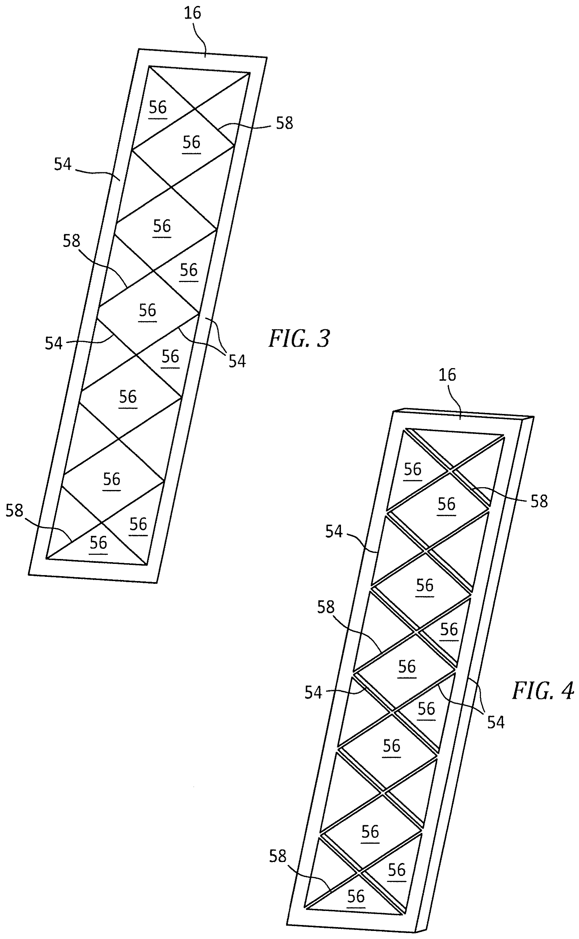

Referring also to Fig. 2 to Fig. 7, the swirl recovery vane 16 can include structural features 54 configured to provide structural capabilities for various loads the swirl recovery vane 16 experiences as part of the gas turbine engine 10. The structural loads can include vertical loads, axial loads, torque loads and the like. The structural features 54 can be formed within the swirl recovery vane 16 as seen in Fig. 3 as a two-dimensional shape as well as in Fig. 4 shown as three-dimensional shapes. The structural features 54 can extend along the span dimension 44 and/or chord dimension 46 of the swirl recovery vane 16.

The structural features 54 can provide the structural load characteristics needed to bolster the swirl recovery vane 16 structure. The structural features 54 can support a load along the span dimension 44 of the swirl recovery vane 16 between the attachment region 40 and tip region 42. The swirl recovery vane 16 maintains the aerodynamic loads presented downstream of the propulsor rotor 12. The aerodynamic loads are created by the propulsor rotor exhaust 55 flowing over the pressure side 48 and suction side 50 and other surfaces of the swirl recovery vane 16, as seen in Fig 1.

The structural features 54 can be configured to create acoustic pockets or acoustic receivers 56 for depositing the acoustic treatment 52. The acoustic receivers 56 can be formed into any variety of shapes that can provide a location to situate the acoustic treatment 52 as well as allow the structural features 54 that define their perimeter to provide structural utility. The acoustic receivers 56 can be formed from ribs 58 that bound the pockets/receivers 56.

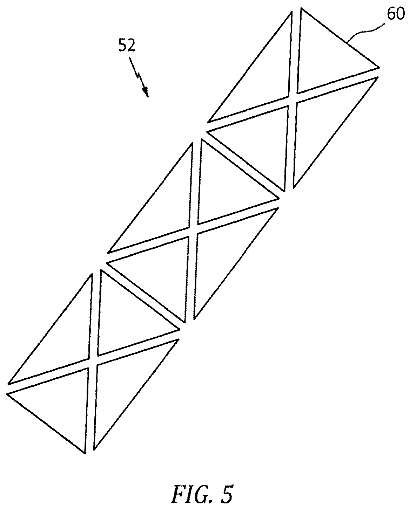

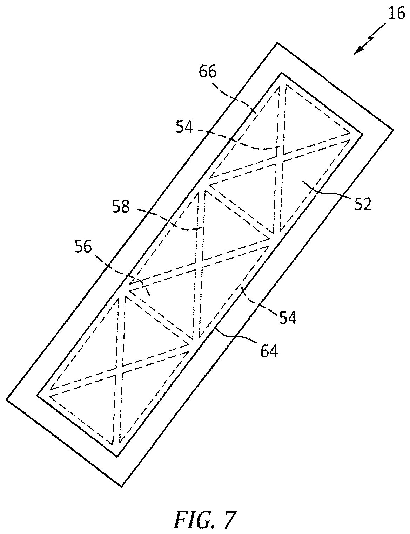

As seen in Fig. 5, the acoustic treatment 52 can be formed as acoustic panels 60 having the cross section shape configured to be inserted into acoustic receivers 56 as individual panels, as seen in Fig. 7. The acoustic receiver 56 can have a cross sectional shape that allows for securing the acoustic panel 60 as well as allowing for insertion of the acoustic panel 60 into the acoustic receiver 56. The acoustic receiver 56 can have virtually any shape, such as oval, circle, semicircle, triangle, square, rectangle, parallelogram, rhombus, trapezoid, diamond, pentagon, hexagon, octagon, nonagon, decagon and the like. The acoustic receivers 56 can be formed in the swirl recovery vane 16 at predetermined locations along the span 44 of the swirl recovery vane 16 as seen in Fig. 3.

The acoustic panels 60 can be configured to be inserted into the acoustic receivers 56. The acoustic panels 60 can be disposed into and/or can be configured to be connected with clips, an adhesive and/or insertable as a snap fit or friction fit into the acoustic receivers 56. The locations of the acoustic receivers 56 can be located dependent on the design of the swirl recovery vane 16 final count/aero design, acoustic and attachment structural requirements.

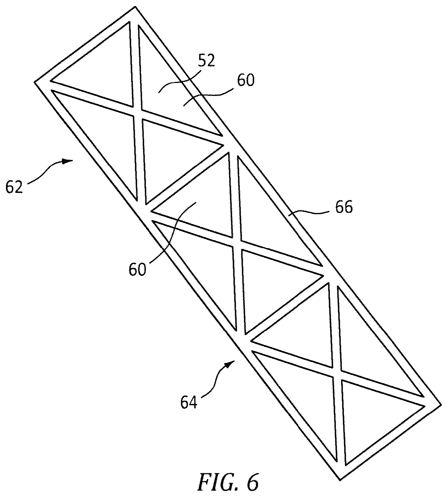

In an exemplary embodiment as seen in Fig. 6, the acoustic treatment 52 can be formed in operative communication with a surface skin 66 to be included in a combination panel 62. The combination panel 62 can have both the acoustic treatment 52 and the surface skin 66 in combination, consisting of the skin 66 with the series of acoustic panels 60 pre adhered. The combination panel 62 can be coupled in operative communication with the swirl recovery vane 16 as a one piece insert 64 that can provide the sound energy dissipation function. The surface skin 66 can attach when the skin is applied to the swirl recovery vane 16, each acoustic receiver 56 receives a corresponding acoustic panel 60 in a single operation and adhering the skin 66 to the swirl recovery vane 16 would in turn secure the acoustic panels 60 to the assembly. The skin 66 with acoustic panels 60 attached engages with the structural features 54/ribs 58 that are included on the swirl recovery vane 16.

The acoustic panels 60 can be interchangeable, replaceable, serviceable, or removable to accommodate design changes and/or damage to the acoustic panels 60. The acoustic panels 60 can be shaped to influence the acoustic capability in the proximity of the swirl recovery vane 16. The acoustic panels 60 can be varied from one swirl recovery vane 16 to another. The variation can be by varying the materials, the shape and the location of the acoustic panels 60.

The surface skin 66 as seen in Fig. 7 can be in operative communication with the structural feature 54 and the acoustic treatment 52. The surface skin 66 can be applied over the ribs 58 configured for aerodynamic benefit to the swirl recovery vane 16. The surface skin 66 can allow the sound energy to pass through and penetrate the acoustic treatment 52. The pressure side 48 and/or suction side 50 of the swirl recovery vane 16 may be configured with a recess to receive the surface skin 66 such that once the surface skin 66 is installed and secured the perimeter interface between the surface skin 66 and swirl recovery vane 16 is aerodynamically friendly without steps or gaps.

A technical advantage of the disclosed exemplary swirl recovery vane with structurally capable acoustic treatment includes a capacity to dampen acoustic noise along the surfaces of swirl recovery vanes.

Another technical advantage of the disclosed exemplary swirl recovery vane with structurally capable acoustic treatment includes structural features formed in the swirl recovery vane configured to receive acoustic panels.

Another technical advantage of the disclosed exemplary swirl recovery vane with structurally capable acoustic treatment includes replaceable panels with acoustic treatment.

Another technical advantage of the disclosed exemplary swirl recovery vane with structurally capable acoustic treatment includes patterns of acoustic panels attached to swirl recovery vane enabling both aero and structural function.

Another technical advantage of the disclosed exemplary swirl recovery vane with structurally capable acoustic treatment includes a capacity to maintain a minimum thickness of the airfoil shape.

Another technical advantage of the disclosed exemplary swirl recovery vane with structurally capable acoustic treatment includes a modularity for manufacturability.

Another technical advantage of the disclosed exemplary swirl recovery vane with structurally capable acoustic treatment includes a reduction in propulsor rotor aero blockage.

There has been provided a swirl recovery vane with structurally capable acoustic treatment. While the swirl recovery vane with structurally capable acoustic treatment has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A swirl recovery vane with structurally capable acoustic treatment comprising:
a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane;
a structural feature formed within the swirl recovery vane extending at least one of spanwise through the swirl recovery vane between the attachment region and the tip region and/or chordwise between the leading edge and the trailing edge;
an acoustic receiver formed within the structural feature extending at least one of spanwise through the swirl recovery vane between the attachment region and the tip region or chordwise between the leading edge and the trailing edge; and
an acoustic panel inserted into the acoustic receiver.

2. The swirl recovery vane with structurally capable acoustic treatment according to claim 1, wherein the structural feature and the acoustic receiver are formed in the swirl recovery vane at predetermined locations along the span of the swirl recovery vane.

3. The swirl recovery vane with structurally capable acoustic treatment according to claim 1 or 2, wherein the acoustic panel is located on the pressure side.

4. The swirl recovery vane with structurally capable acoustic treatment according to any of claims 1 to 3, wherein the acoustic receiver shape is selected from the group consisting of oval, circle, semicircle, triangle, square, rectangle, parallelogram, rhombus, trapezoid, diamond, pentagon, hexagon, octagon, nonagon, decagon.

5. The swirl recovery vane with structurally capable acoustic treatment according to any of claims 1 to 4, further comprising:
the acoustic treatment formed within the acoustic receiver, the acoustic treatment configured to dissipate sound energy.

6. The swirl recovery vane with structurally capable acoustic treatment according to any of claims 1 to 5, wherein the acoustic panel is configured insertable as a snap fit or friction fit into the acoustic receiver.

7. The swirl recovery vane with structurally capable acoustic treatment according to any of claims 1 to 6, wherein the acoustic panel is configured interchangeable to accommodate design changes and/or damage to the acoustic panel.

8. The swirl recovery vane with structurally capable acoustic treatment according to any of claims 1 to 7, wherein the acoustic panel is located on the suction side of the swirl recovery vane.

9. The swirl recovery vane with structurally capable acoustic treatment according to any of claims 1 to 8, further comprising:
a surface skin in operative communication with the acoustic panel.

10. A gas turbine engine with a swirl recovery vane with structurally capable acoustic treatment comprising:
a propulsor rotor located within an open environment; and
an array of swirl recovery vanes supported downstream from the propulsor rotor, the array of swirl recovery vanes attached to a nacelle flow surface; each swirl recovery vane of the array of swirl recovery vanes comprising a configuration as claimed in any of claims 1 to 9.

11. A process for gas turbine engine with a swirl recovery vane with a structurally capable acoustic treatment comprising:
locating a propulsor rotor within an open environment;
supporting an array of swirl recovery vanes downstream from the propulsor rotor;
attaching the array of swirl recovery vanes to a nacelle flow surface by;
coupling a attachment region of a swirl recovery vane of the array of swirl recovery vanes in operative communication with the nacelle flow surface;
forming a structural feature within the swirl recovery vanes extending at least one of spanwise through the swirl recovery vane between the attachment region and a tip region of the swirl recovery vane and/or chordwise from a leading edge to a trailing edge;
forming an acoustic receiver within the swirl recovery vane extending at least one of spanwise from the swirl recovery vane between the attachment region and the tip region or chordwise from the leading edge to the trailing edge; and
inserting an acoustic panel into the acoustic receiver.

12. The process according to claim 11, further comprising:
forming the acoustic receiver in the swirl recovery vane at a predetermined location along the span of the swirl recovery vane; and/or
further comprising:
forming the acoustic treatment within the acoustic panel; and
configuring the acoustic treatment to dissipate sound energy.

13. The process according to claim 11 or 12, further comprising:
locating the acoustic receiver on the pressure side of the swirl recovery vane.

14. The process according to any of claims 11 to 13, further comprising:
configuring the acoustic panel insertable as a snap fit or friction fit into the acoustic panel receiver.

15. The process according to any of claims 11 to 14, further comprising:
configuring the acoustic panel and a surface skin as a combination panel interchangeable to accommodate design changes and/or damage; and/or
further comprising:
shaping the acoustic panel to influence acoustic dampening capability in the proximity of the swirl recovery vane.
